Europäisches Patentamt

European Patent Office

Office européen des brevets

(19)

(11) EP 0 750 435 A1

(12) DEMANDE DE BREVET EUROPEEN

(43) Date de publication:
27.12.1996 Bulletin 1996/52

(51) Int Cl.$^6$: H04Q 3/68, H04B 7/204

(21) Numéro de dépôt: 96401323.9

(22) Date de dépôt: 18.06.1996

(84) Etats contractants désignés:
DE ES FR GB IT NL SE

(30) Priorité: 23.06.1995 FR 9507581

(71) Demandeur: AEROSPATIALE Société Nationale Industrielle
75781 Paris Cédex 16 (FR)

(72) Inventeur: Chaperon, Pierre
06200 Nice (FR)

(74) Mandataire: Rinuy, Santarelli
14, avenue de la Grande Armée
75017 Paris (FR)

(54) **Réseau de commutateurs C pour la connexion de canaux redondants**

(57) Un réseau de commutateurs a n entrées et n+p sorties (ou inversement), ces n entrées étant destinées à être connectées à toute combinaison de n sorties parmi les n+p sorties, n et p étant des entiers quelconques prédéterminés tels que n est supérieur ou égal à 4 et p est supérieur ou égal à 2, ces commutateurs comportant quatre pattes et au moins deux configurations. Il comporte :

- un nombre n de blocs nominaux comprenant chacun un commutateur, une entrée, une sortie, une patte d'entrée et une patte de sortie,

- un nombre p de blocs de redondance comprenant chacun une sortie et une patte d'entrée,

- un nombre a de blocs généraux, a étant le plus petit entier tel que 2a soit égal ou supérieur à n, chaque bloc général comportant un bloc d'interconnexion ayant p pattes d'entrée et p pattes de sortie. Les blocs nominaux et redondants sont répartis parmi ces blocs généraux à raison d'au plus deux blocs nominaux, chaque bloc général ayant un nombre de pattes d'entrée connectées au moins égal au nombre de pattes de sortie connectées à des blocs de redondance, chaque patte de sortie de chaque bloc étant reliée à une patte d'entrée d'un autre bloc.

Fig.12B

## Description

L'invention concerne les réseaux de commutateurs prévus pour permettre une redondance dans des circuits de traitement à canaux multiples, tels que, par exemple, ceux utilisés dans des charges utiles de satellites de télécommunications.

A cause de l'impossibilité de réparer les satellites lorsqu'ils sont en orbite, certains de leurs équipements sont doublés par des équipements de secours ; ceux-ci, aussi appelés équipements redondants, ne sont activés qu'en cas de défaillance des équipements nominaux. Il faut à cet effet prévoir, en amont et en aval des équipements nominaux ou redondants montés en parallèles, des réseaux de commutateurs (aussi appelés matrices de commutateurs) qui ont des entrées et des sorties en nombre différents, qui sont symétriques l'un de l'autre et qui sont adaptés à être commandés en synchronisme en sorte que leurs configurations soient à tout instant symétriques l'une de l'autre et que le reste de la charge utile soit insensible à l'identité des équipements qui sont réellement en service à cet instant.

On comprend aisément que les risques de pannes sont beaucoup plus importants pour des équipements actifs que pour des éléments passifs.

Ces risques de pannes apparaissent notamment dans les charges utiles de satellites de communications qui comportent typiquement une ou plusieurs antenne (s) de réception, un circuit de réception, un étage de démultiplexage où les signaux correspondant aux divers canaux sont séparés, un étage de traitement servant pour l'essentiel à amplifier ces signaux, un étage de multiplexage et un circuit d'émission connecté à des antennes d'émission.

La pratique a montré que les équipements d'amplification sont susceptibles de défaillances et c'est principalement pour tenir compte de ce que le nombre de canaux disponibles pour amplifier les signaux est en conséquence supérieur au nombre de signaux à traiter (ou nombre de canaux nominaux) que les réseaux de commutateurs ont été développés.

De même il est apparu que le circuit de réception et le circuit d'émission, comportant autant de chaînes de traitement qu'il y a de signaux à démultiplexer ou à multiplexeur, étaient eux aussi susceptibles de pannes : il était là aussi utile de prévoir des chaînes de traitement de secours.

Si $n$ est le nombre d'équipements nominaux et $p$ le nombre d'équipements de secours, le réseau de commutateurs amont (ou aval) doit avoir $n$ entrées et $n+p$ sorties (ou inversement).

Il est clair que ces réseaux amont et aval sont destinés à maintenir un fonctionnement nominal avec $n$ équipements jusqu'à un total de $p$ pannes. Ce ne sera que lors d'une panne suivante que la mission du satellite sera affectée.

Le problème s'est en conséquence posé de concevoir des réseaux de commutateurs permettant de faire face, à partir d'une série de $n$ équipements nominaux, à n'importe quelle succession de $p$ défaillances dans ces équipements nominaux ou dans les équipements redondants qui sont mis en service.

On comprend aisément que ce problème est d'autant plus complexe que $n$ et $p$ sont grands

On comprend également que la solution dépend du type de commutateur utilisé. On se limitera ici aux commutateurs ayant quatre pattes.

On connaît en effet trois grandes catégories de commutateurs :

- les commutateurs de type C (aussi appelé parfois DPDT) adaptés à tourner par pas de 90° et adaptés à connecter n'importe quelle patte donnée soit à l'une soit à l'autre des pattes voisines, mais jamais à la patte qui lui est opposée ; ces commutateurs n'ont en fait que deux configurations distinctes de connexion ;

- les commutateurs de type R adaptés à tourner par pas de 45° et adaptés à connecter n'importe quelle patte donnée à n'importe laquelle des trois autres pattes, seul le cas de la connexion entre des pattes opposées impliquant une isolation de chacune des autres pattes ; ces commutateurs ont quatre configurations distinctes de connexion (incluant les deux configurations de connexion des commutateurs de type C ;

- les commutateurs de type T adaptés à tourner par pas de 45° et adaptés à connecter n'importe quelle patte donnée à n'importe quelle autre patte tout en connectant les deux autres pattes, le cas de la connexion entre des pattes opposées impliquant une connexion, croisée, des autres pattes ; ces commutateurs ont trois configurations distinctes de connexion (les deux configurations décalées de 90° correspondant à des connexions en ligne droite définissent ici des modes de connexion identiques pour les quatre pattes à la différence du cas des commutateurs de type R.

Ces divers commutateurs existent en technologie guide d'onde et en technologie du type coaxial.

Les commutateurs les plus utilisés sont ceux des types R et T, principalement en amont et en aval de l'étage de traitement (amplification) des charges utiles de télécommunications.

L'invention concerne par contre le cas des commutateurs de type C. Ceux-ci ont jusqu'à présent été utilisés en amont et en aval des étages de réception ou d'émission, donc avec des valeurs très faibles de $n$ et $p$ ($n$ inférieur ou égal à 3 ; $p$ inférieur ou égal à 2).

Pour des valeurs supérieures de $n$ ou de $p$, l'homme de métier a tendance à considérer que les commutateurs de type C sont a priori bien moins appropriés que ceux du type R ou T : puisque les commutateurs du type C n'ont que deux configurations, il est logique de supposer qu'il faut sans doute, pour des valeurs données de $n$ et $p$, beaucoup plus de commutateurs de type C que de commutateurs de type T ou R. Cela explique qu'on ne connaisse actuellement, pour des valeurs de $n$ et $p$ supérieures à 3 et 2 respectivement, que des réseaux de commutateurs de type T et/ou R et que l'on manque totalement d'informations quant à la structure à donner à un réseau de commutateurs à $n$ entrées et $n+p$ sorties (ou inversement) pour garantir que l'on puisse connecter n'importe quelle combinaison des $n$ entrées à n'importe quelle combinaison de $n$ sorties choisies parmi les $n$ sorties nominales et les $p$ sorties redondantes, et donc garantir que l'on puisse assurer une liaison de chaque entrée à une sortie jusqu'à l'occurrence de pannes rendant inutilisables $p$ sorties.

C'est ce problème que l'invention vise à résoudre, avec un nombre de commutateurs de type C aussi modéré que possible. En fait, l'invention ne vise pas à donner le nombre minimum de commutateurs pour un couple (n, p) donné, mais vise à donner, pour un tel couple, un nombre de commutateurs de type C dont il est certain qu'il suffise pour atteindre les performances indiquées ci-dessus.

L'invention propose à cet effet un réseau de commutateurs à $n$ entrées et $n+p$ sorties (ou inversement), ces n entrées étant destinées à être connectées à toute combinaison de $n$ sorties parmi les $n+p$ sorties, $n$ et $p$ étant des entiers quelconques prédéterminés tels que $n$ est supérieur ou égal à 4 et $p$ est supérieur ou égal à 2, ces commutateurs comportant quatre pattes et au moins deux configurations, ce réseau comportant :

- un nombre $n$ de blocs nominaux comprenant chacun un commutateur, une entrée, une sortie, une patte d'entrée et une patte de sortie,
- un nombre $p$ de blocs de redondance comprenant chacun une sortie et une patte d'entrée,
- un nombre $a$ de blocs généraux, $a$ étant le plus petit entier tel que $2a$ soit égal ou supérieur à $n$, chaque bloc général comportant un bloc d'interconnexion ayant $p$ pattes d'entrée et $p$ pattes de sortie, n'importe quel groupe de $i$ pattes d'entrée avec $i \leq p$, pouvant être connecté à n'importe quel groupe de $i$ pattes de sortie, les blocs nominaux et redondants étant répartis parmi ces blocs généraux à raison d'au plus deux blocs nominaux et d'au plus $p$ blocs redondants par bloc général, ces blocs d'interconnexion ayant conjointement $n$ pattes d'entrée connectées respectivement aux pattes de sortie des blocs nominaux, et $p$ pattes de sortie connectées respectivement aux pattes d'entrée des blocs de redondance, chaque bloc général ayant un nombre de pattes d'entrée connectées à des pattes de sortie des autres blocs généraux, qui est au moins égal au nombre de ses pattes de sortie qui sont connectées à des blocs de redondance, chaque patte de sortie de chaque bloc étant reliée à une patte d'entrée d'un autre bloc.

Il est clair que l'invention se généralise au cas de commutateurs à quatre pattes ayant plus de deux configurations distinctes de travail, tels que les commutateurs de type T ou R, même si l'intérêt pratique s'en trouve réduit.

En fait, l'invention prend en considération le fait que, avec des commutateurs à quatre pattes n'ayant que deux configurations de travail, une patte donnée ne peut venir en connexion qu'avec deux des trois autres pattes, lesquelles deux pattes ne peuvent jamais être connectées l'une à l'autre. Selon l'invention, on détermine après la connexion d'une patte d'un tel commutateur à une entrée (respectivement une sortie) le sens de circulation pour chacune des autres pattes (on se fixe a priori de ne faire circuler par la patte opposée que des signaux d'entrée, et les pattes adjacentes sont nécessairement des pattes de sortie) ; cela détermine de proche en proche le sens de circulation par les pattes des commutateurs suivants.

Selon un aspect avantageux, on sait réaliser, pour une valeur de $p$ donnée quelconque, un bloc d'interconnexion de l'aide de (2p-3) commutateurs au plus.

Selon une caractéristique préférée de l'invention, les blocs d'interconnexion à mettre en oeuvre pour une valeur donnée de $p$ sont conçus comme suit. Chacun d'entre eux est constitué d'un commutateur primaire et d'une succession de p-2 étages de rang $1$ à $p-2$ constitués chacun d'un commutateur d'entrée à deux pattes d'entrée et d'un commutateur ayant deux pattes de sortie et étant connecté au commutateur d'entrée, le commutateur d'entrée (respectivement de sortie) de chaque étage ayant une patte d'entrée connectée à une patte de sortie du commutateur d'entrée (respectivement de sortie) de l'étage de rang supérieur, et chacun des commutateurs d'entrée et de sortie de l'étage de rang $1$ ayant une patte de sortie connectée à une patte d'entrée du commutateur primaire.

L'invention est notamment applicable à des valeurs de $n$ et/ou $p$ supérieures ou égales à 4 voire 5.

Des objets, caractéristiques et avantages de l'invention ressortent de la description qui suit, donnée à titre d'exemple non limitatif, en regard des dessins annexés sur lesquels :

- les figures 1A et 1B montrent un commutateur à quatre pattes et deux configurations possibles de service,
- la figure 2 est le schéma d'un bloc nominal,
- la figure 3 est le schéma d'un bloc de redondance, redondance,
- la figure 4 est le schéma général d'un bloc d'interconnexion, à 5 pattes d'entrées et 5 pattes de sortie,
- la figure 5 est le schéma d'un noyau de bloc d'interconnexion,
- la figure 6 est le schéma d'un étage de bloc d'interconnexion,
- les figures 7A à 7D représentent les modes possibles de deux étages adjacents de rang décroissant,

- les figures 8A et 8B représentent les modes de connexion d'un étage de rang 1 à un commutateur primaire,
- la figure 9 est le schéma d'un bloc d'interconnexion à 4 pattes d'entrée et 4 pattes de sortie,
- la figure 10 est le schéma d'un bloc d'interconnexion ayant, comme celui de la figure 4, 5 pattes d'entrée et 5 pattes de sortie,
- la figure 11A est le schéma des blocs généraux que peut comporter un réseau de commutateurs à 4 entrées et 6 sorties,
- la figure 11B est un schéma montrant un exemple de » connexion des blocs généraux de la figure 11A,
- la figure 12A est le schéma des blocs généraux que peut comporter un réseau de commutateurs à 5 entrées et 10 sorties, et
- la figure 12B est un schéma montrant un exemple de connexion des blocs généraux de la figure 12A.

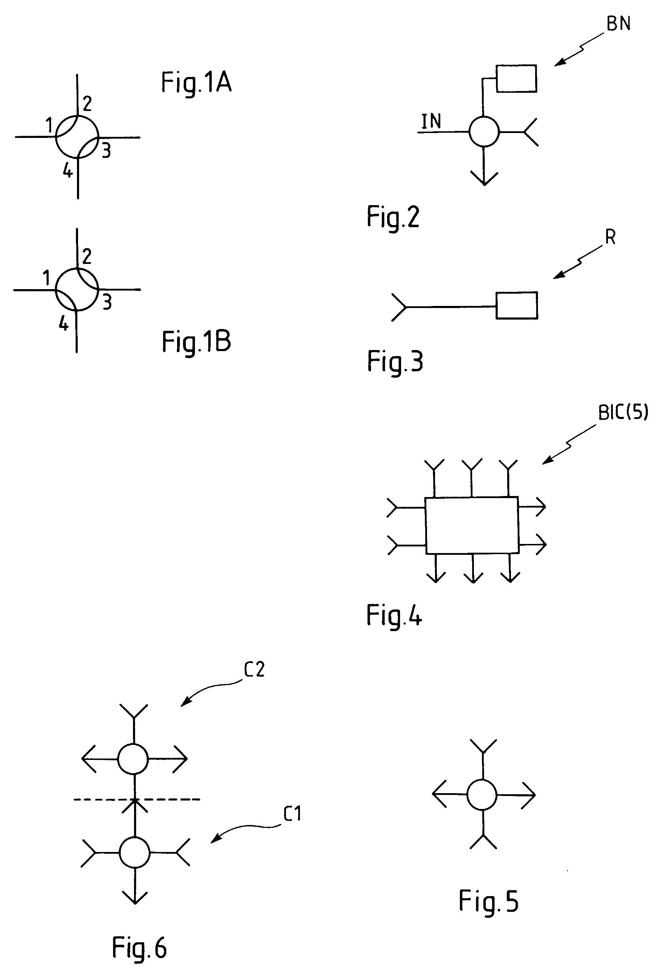

Les figures 1A et 1B représentent un commutateur de type C. Il comporte quatre pattes. Il ne comporte que deux configurations possibles : soit sa patte 1 est connectée à la patte adjacente 2, soit elle est connectée à la patte adjacente 4, mais la patte 1 n'est jamais connectée à la patte opposée 3, de même que les pattes opposées 2 et 4 ne sont jamais connectées l'une à l'autre.

Il en découle que, si une patte est destinée à être connectée à une entrée (on dit alors que c'est une patte d'entrée), le signal incident ne peut sortir que par les pattes adjacentes.

Comme cela ressortira plus loin, l'invention propose de fixer ainsi a priori le sens de circulation dans les pattes des commutateurs.

L'invention conduit en conséquence à déterminer la structure d'un certain nombre de blocs élémentaires permettant de constituer, pour toutes valeur de $n$ et $p$, un réseau de commutateurs de type C (ou analogue) ayant $n$ entrées (ou sorties) pouvant être connectées à une combinaison quelconque de $n$ sorties (ou entrées) parmi $n+p$ sorties (ou entrées possibles).

Trois types de blocs sont proposés à cet effet.

La figure 2 représente un bloc nominal BN comportant un commutateur dont une patte connectée à une entrée de réseau (repérée IN), une patte adjacente est connectée à une sortie (repérée par un rectangle), la patte opposée à celle connectée à l'entrée est une patte libre d'entrée (représentée par un signe d'inégalité raccordé par sa pointe au trait représentant la patte) et la patte opposée à celle connectée à la sortie est une sortie libre de sortie (repérée par une flèche).

La figure 3 est le schéma d'un bloc de redondance R. Il est très simple puisqu'il est constitué d'une sortie dont la patte de connexion est évidemment une patte d'entrée.

La figure 4 est le schéma général d'un bloc d'interconnexion BIC schématisé par un rectangle ayant autant de pattes d'entrée que de pattes de sortie. Par convention, on désigne par BIC(k) un bloc d'interconnexion à $k$ pattes de sortie. C'est pourquoi le bloc de la figure 4 est repéré BIC(5).

Chacun des blocs BIC(k) est formé de commutateurs dont le nombre et l'arrangement sont tels que n'importe quel groupe de $i$ pattes d'entrée avec $i \leq k$, puisse être connecté à n'importe quel groupe de $i$ pattes de sortie.

Les figures 5 et 6 montrent les deux blocs élémentaires à partir desquels il est possible de constituer de tels blocs d'interconnexion, pour toute valeur de $k$.

La figure 5 représente un commutateur primaire, ou noyau, tandis que la figure 6 montre des paires de commutateurs, ou étages.

Chaque étage est constitué d'un premier commutateur ayant deux pattes d'entrée et une patte de sortie et d'un second commutateur ayant deux pattes de sortie et une patte d'entrée ; en d'autres termes, cette paire peut s'analyser comme le résultat de la connexion de la patte de sortie du premier commutateur à une patte d'entrée du second commutateur. Par convention, le premier commutateur C1 est appelé commutateur d'entrée et le second commutateur C2 est appelé commutateur de sortie.

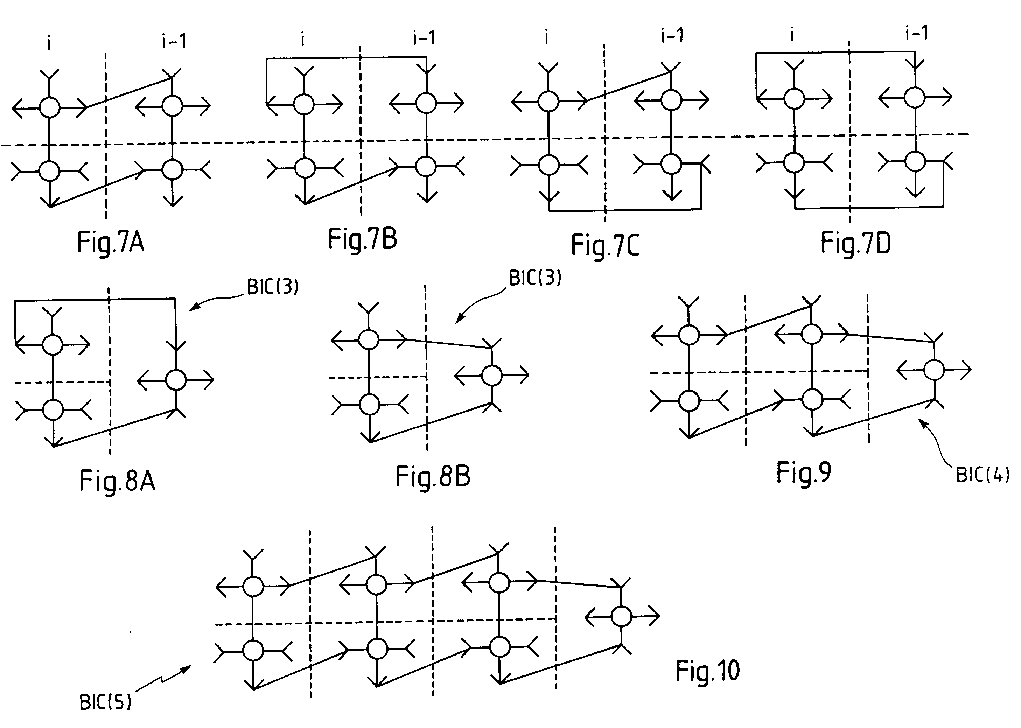

Les figures 7A à 7D montrent les modes possibles de connexion de deux étages adjacents de rang $i$ et $i-1$, tandis que les figures 8A et 8B montrent les modes possibles de connexion de l'étage de plus petit rang (rang 1) au noyau.

En effet, un bloc d'interconnexion est formé d'un noyau et d'une suite ordonnée d'étages.

La connexion de deux étages adjacents se fait par liaison de la patte de sortie du commutateur d'entrée de l'étage de rang le plus élevé à une patte d'entrée du commutateur d'entrée de l'étage inférieur, et par liaison d'une patte de sortie du commutateur de sortie de cet étage de rang le plus élevé à la patte d'entrée du commutateur de sortie de l'étage inférieur. Puisqu'il y a deux possibilités pour chaque liaison, il y a donc au total quatre configurations de connexion entre deux étages successifs, telles que représentées aux figures 7A à 7D.

Quant à l'étage de rang 1, il se connecte à un noyau par liaison d'une patte de sortie de chacun de ses commutateurs à une patte d'entrée du noyau. Les figures 8A et 8B montrent les deux configurations possibles.

Chacun des blocs de ces figures 8A et 8B comporte trois entrées et trois sorties. On vérifie que l'on peut connecter les entrées aux sorties selon n'importe quelle combinaison. Ces blocs répondent donc bien aux conditions imposées ci-dessus aux blocs d'interconnexion ayant trois pattes d'entrée et trois pattes de sortie. Les figures 8A et 8B montrent donc des exemples de réalisation de blocs BIC(3).

On vérifie aisément qu'un noyau seul constitue un bloc BIC(2).

Le fait de rajouter un étage revient à rajouter une entrée et une sortie, et on peut vérifier qu'il est possible de trouver une configuration des commutateurs de la figure 9 qui connecte n'importe quel groupe d'entrées à n'importe quel groupe de sorties. Le bloc de la figure 9 répond donc bien aux conditions d'un bloc BIC(4).

On vérifie de même que le bloc de la figure 10 peut être désigné par la référence BIC(5).

Bien entendu ces figures 5 à 10 ne prétendent pas à proposer la seule manière possible de former un bloc d'interconnexion ; il est possible que dans certains cas on puisse n'utiliser qu'un plus faible nombre de commutateurs. Ces figures donnent néanmoins un nombre de commutateurs avec lequel il est certain que l'on puisse construire un bloc BIC. On vérifie que pour réaliser un bloc BIC(i) il faut un nombre de commutateurs au plus égal à (2i-3).

Les blocs élémentaires des figures 2 à 4 permettent de constituer des réseaux à $n$ entrées et $n+p$ sorties, ou inversement, avec la possibilité de faire face à un nombre pouvant atteindre $p$ sans avoir à renoncer à une quelconque entrée, et ce quelles que soient les valeurs de $n$ et $p$.

Pour ce faire, l'invention propose la méthodologie suivante.

On prend :

- $n$ blocs nominaux BN
- $p$ blocs redondants R
- $a$ blocs d'interconnexion de type BIC(p), où $a$ est tel que $2a$ soit le plus petit entier égal ou supérieur à $n$.

La structure des blocs BIC utilisés ne dépend que de $p$.

Le nombre total de commutateurs est de :

$$n + a(2p-3)$$

On connecte les $n$ pattes de sortie des blocs nominaux à une combinaison quelconque de $n$ pattes d'entrée des blocs BIC parmi les $a,p$ pattes possibles, à raison d'au plus deux blocs nominaux par bloc d'interconnexion.

De même, on connecte les $p$ pattes d'entrée des blocs de redondance à une combinaison quelconque de $p$ pattes de sortie des blocs BIC parmi les $a,p$ pattes possibles.

On obtient ainsi un nombre $a$ de blocs généraux constitués chacun d'un bloc BIC et des blocs BN et R que l'on a choisi arbitrairement d'y fixer.

On comprend aisément que l'on connecte toutes les pattes de sortie à des pattes d'entrée, il reste finalement $p$ pattes d'entrée libres.

La seule condition qui s'applique aux liaisons des blocs généraux est que chaque bloc général ait un nombre de pattes d'entrée connectées à des pattes de sortie d'autres blocs généraux au moins égal au nombre de ses pattes de sortie qui sont connectées à des blocs de redondance. En fait cette condition concerne la disposition des $p$ pattes d'entrée restées libres. Si elle n'était pas respectée on ne pourrait profiter à la fois de la présence de toutes les sorties de redondance.

Pour ce faire, le plus simple est de commencer par connecter les pattes d'entrée du bloc général comportant le plus de blocs de redondance, et ainsi de suite.

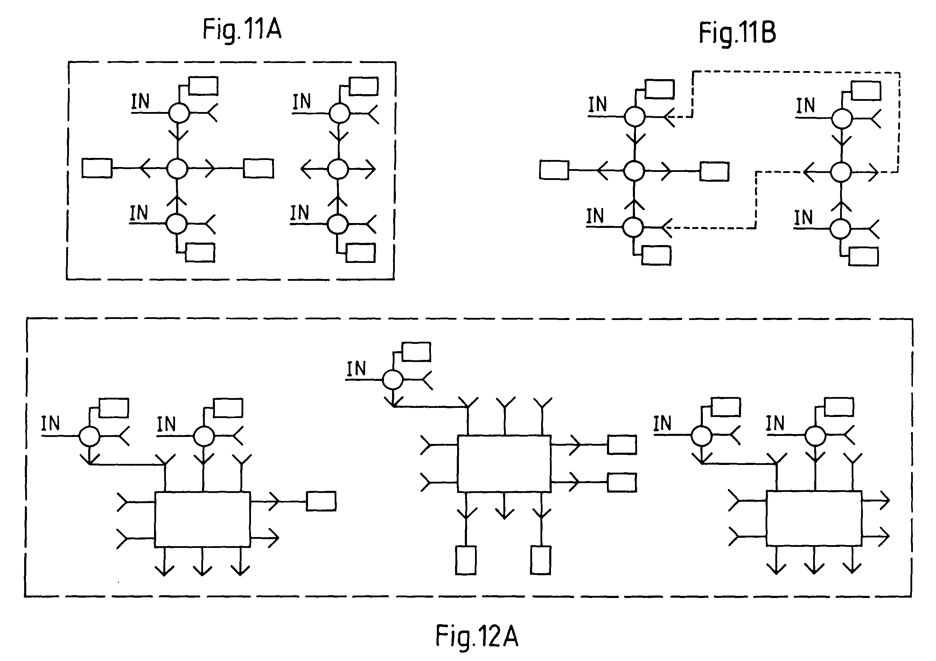

La figure 11A représente un exemple de réalisation d'un réseau de commutateurs avec n=4 et p=2. La valeur de $a$ est 2 de sorte qu'il y a deux blocs d'interconnexion BIC(2), c'est-à-dire constitués d'un simple noyau. Deux blocs nominaux sont connectés à chaque bloc BIC tandis que les deux blocs de redondance sont connectés sur un même bloc BIC (celui de gauche). Il faut connecter deux pattes d'entrée du bloc général de gauche à deux pattes de sortie du bloc général de droite. La figure 11B représente un exemple de réseau ainsi obtenu à partir de la figure 11A.

La figure 12A représente un exemple de réalisation d'un réseau de commutateurs avec n=5 et p=5. Il y a donc trois blocs d'interconnexion de type BIC(5) donc par exemple réalisés selon le schéma de la figure 10.

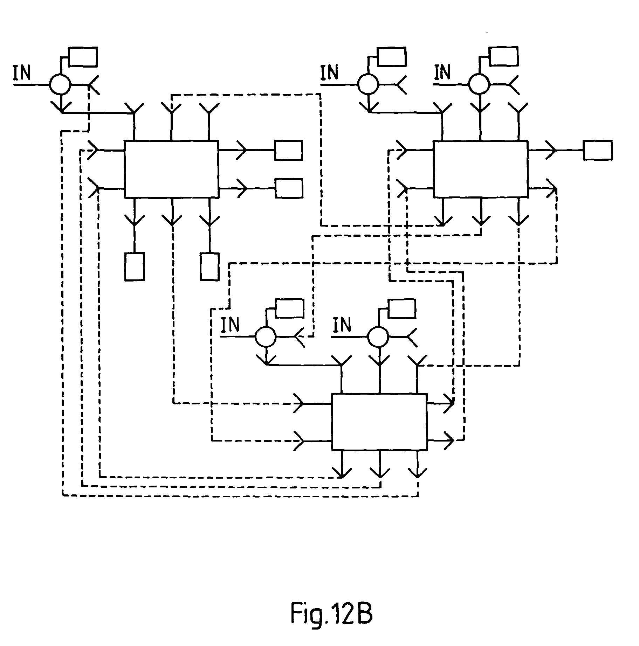

Seul le bloc général central ne comporte qu'un bloc nominal ; par contre, il comporte quatre blocs de redondance. Le bloc général de gauche comporte deux blocs nominaux et un bloc de redondance, et le bloc général de droite ne comporte que deux blocs nominaux. Pour relier les blocs généraux entre eux, on commence par relier au moins quatre pattes d'entrée du bloc général central à des pattes de sortie des autres blocs ; on procède ensuite de même pour le bloc de gauche. On obtient ainsi, par exemple, le schéma de la figure 12B, où le bloc central est venu en haut à gauche et le bloc de gauche est venu en haut à droite.

On trouve une seule patte d'entrée libre sur l'ancien bloc central (on a bien connecté au moins quatre de ses pattes d'entrée à des pattes de sortie des autres blocs). On trouve trois pattes d'entrée libres sur l'ancien bloc de gauche (on a bien connecté au moins une de ses pattes d'entrée à une patte de sortie d'un autre bloc) et une patte d'entrée libre sur l'ancien bloc de droite.

Bien entendu d'autres modes de connexion sont possibles sous réserve de respecter les règles précitées.

On appréciera que l'invention permet de s'adapter à n'importe quelles valeurs de $n$ et $p$.

Il va de soi que la description qui précède n'a été proposée qu'à titre d'exemple non limitatif et que de nombreuses variantes peuvent être proposées par l'homme de l'art sans sortir du cadre de l'invention.

**Revendications**

1. Réseau de commutateurs a $n$ entrées et $n+p$ sorties (ou inversement), ces $n$ entrées étant destinées à être connectées à toute combinaison de $n$ sorties parmi les $n+p$ sorties, $n$ et $p$ étant des entiers quelconques prédéterminés tels que $n$ est supérieur ou égal à 4 et $p$ est supérieur ou égal à 2, ces commutateurs comportant quatre pattes et au moins deux configurations, ce réseau comportant :

- un nombre $\underline{n}$ de blocs nominaux comprenant chacun un commutateur, une entrée, une sortie, une patte d'entrée et une patte de sortie,
- un nombre $\underline{p}$ de blocs de redondance comprenant chacun une sortie et une patte d'entrée,
- un nombre $\underline{a}$ de blocs généraux, $\underline{a}$ étant le plus petit entier tel que $\underline{2a}$ soit égal ou supérieur à $\underline{n}$, chaque bloc général comportant un bloc d'interconnexion ayant $\underline{p}$ pattes d'entrée et $\underline{p}$ pattes de sortie, n'importe quel groupe de $\underline{i}$ pattes d'entrée avec $\underline{i} \leq \underline{p}$, pouvant être connecté à n'importe quel groupe de $\underline{i}$ pattes de sortie, les blocs nominaux et redondants étant répartis parmi ces blocs généraux à raison d'au plus deux blocs nominaux et d'au plus $\underline{p}$ blocs redondants par bloc général, ces blocs d'interconnexion ayant conjointement $\underline{n}$ pattes d'entrée connectées respectivement aux pattes de sortie des blocs nominaux, et $\underline{p}$ pattes de sortie connectées respectivement aux pattes d'entrée des blocs de redondance, chaque bloc général ayant un nombre de pattes d'entrée connectées à des pattes de sortie des autres blocs généraux, qui est au moins égal au nombre de ses pattes de sortie qui sont connectées à des blocs de redondance, chaque patte de sortie de chaque bloc étant reliée à une patte d'entrée d'un autre bloc.

2. Réseau de commutateurs selon la revendication 1, caractérisé en ce que chaque bloc d'interconnexion comporte un nombre de commutateurs au plus égal à (2p-3).

3. Réseau de commutateurs selon la revendication 1 ou la revendication 2, caractérisé en ce que chaque bloc d'interconnexion est constitué d'un commutateur primaire et d'une succession de $\underline{p\text{-}2}$ étages de rang $\underline{1}$ à $\underline{p\text{-}2}$ constitués chacun d'un commutateur d'entrée à deux pattes d'entrée et d'un commutateur ayant deux pattes de sortie et étant connecté au commutateur d'entrée, le commutateur d'entrée (respectivement de sortie) de chaque étage ayant une patte d'entrée connectée à une patte de sortie du commutateur d'entrée (respectivement de sortie) de l'étage de rang supérieur, et chacun des commutateurs d'entrée et de sortie de l'étage de rang $\underline{1}$ ayant une patte de sortie connectée à une patte d'entrée du commutateur principal.

4. Réseau de commutateurs selon l'une quelconque des revendications 1 à 3, caractérisé en ce que $\underline{n}$ est au moins égal à 4..

5. Réseau de commutateurs selon la revendication 4, caractérisé en ce que $\underline{n}$ est au moins égal à 5.

6. Réseau de commutateurs selon l'une quelconque des revendications 1 à 5, caractérisé en ce que $\underline{p}$ est au moins égal à 5.

Fig.1A

Fig.1B

Fig.2

Fig.3

Fig.4

Fig.5

Fig.6

EP 0 750 435 A1

i    i-1

Fig.7A

i    i-1

Fig.7B

i    i-1

Fig.7C

i    i-1

Fig.7D

BIC(3)

Fig.8A

BIC(3)

Fig.8B

Fig.9

BIC(4)

BIC(5)

Fig.10

Fig.11A

Fig.11B

Fig.12A

Fig.12B

Office européen
des brevets

**RAPPORT DE RECHERCHE EUROPEENNE**

Numero de la demande

EP 96 40 1323

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | NATIONAL TELECOMMUNICATIONS CONFERENCE, vol. 3, 3 Décembre 1978, BIRMINGHAM US, pages 40.5.1-7, XP002009844 ENG ET AL.: "Switch matrix for TWTA redundancy on communication satellites" * page 40.5.4, colonne de gauche, ligne 28 - page 40.5.6, colonne de droite, dernière ligne * | 1,4-6 | H04Q3/68 H04B7/204 |
| A | ELECTRONICS AND COMMUNICATIONS IN JAPAN, vol. 59, no. 2, NEW YORK US, pages 96-104, XP002009845 ITO ET AL.: "Test result of experimental microwave on-board switching system" * page 102, colonne de gauche, ligne 15 - page 104, colonne de droite, dernière ligne; figures A2,,A3 * | 1-6 | |
| A | IEEE TRANSACTIONS ON COMPUTERS, vol. 37, no. 4, NEW YORK US, pages 458-462, XP002009846 TZENG ET AL.: "Realizing fault-tolerant interconnection networks via chaining" * page 458, colonne de droite, ligne 15 - page 459, colonne de droite, ligne 2 * | 1-5 | DOMAINES TECHNIQUES RECHERCHES (Int.Cl.6) H04Q H04B |
| A | DE-A-43 17 856 (ANT NACHRICHTENTECHNIK) * abrégé * * page 1, ligne 18 - ligne 64 * | 1,2 | |
| A | INTERNATIONAL CONFERENCE ON COMMUNICATIONS, 14 Juin 1981, DENVER US, pages 5.1.1-8, XP002009847 ASSAL ET AL.: "Satellite switching center for SS-TDMA systems" | | |

Le présent rapport a été établi pour toutes les revendications

| Lieu de la recherche | Date d'achèvement de la recherche | Examinateur |
|---|---|---|
| LA HAYE | 31 Juillet 1996 | Lambley, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)